(19) **Europäisches Patentamt**

**European Patent Office**

**Office européen des brevets**

(11) **EP 1 175 626 B1**

(12) **EUROPÄISCHE PATENTSCHRIFT**

(45) Veröffentlichungstag und Bekanntmachung des Hinweises auf die Patenterteilung:
**26.03.2003 Patentblatt 2003/13**

(21) Anmeldenummer: **00927033.1**

(22) Anmeldetag: **25.04.2000**

(51) Int Cl.[7]: **G01S 7/288**, G01S 7/40

(86) Internationale Anmeldenummer:
**PCT/EP00/03678**

(87) Internationale Veröffentlichungsnummer:
**WO 00/068705 (16.11.2000 Gazette 2000/46)**

(54) **VERFAHREN ZUR EINDEUTIGEN BESTIMMUNG DER ZWISCHENFREQUENZABWEICHUNG BEI EINEM FREQUENZGEREGELTEN RADARSYSTEM**

METHOD FOR CLEARLY DETERMINING THE INTERMEDIATE FREQUENCY DIFFERENCE IN A FREQUENCY-CONTROLLED RADAR SYSTEM

PROCEDE PERMETTANT DE DETERMINER DE FACON UNIVOQUE LA DIFFERENCE DE FREQUENCE INTERMEDIAIRE DANS UN SYSTEME RADAR DONT LA FREQUENCE PEUT ETRE COMMANDEE

(84) Benannte Vertragsstaaten:
**AT BE CH CY DE DK ES FI FR GB GR IE IT LI LU MC NL PT SE**

(30) Priorität: **06.05.1999 DE 19920887**

(43) Veröffentlichungstag der Anmeldung:
**30.01.2002 Patentblatt 2002/05**

(73) Patentinhaber: **ADC Automotive Distance Control System GmbH 88131 Lindau (DE)**

(72) Erfinder:
• **SPECK, Ralph
D-88045 Friedrichshafen (DE)**

• **FLACKE, Joachim
D-88677 Markdorf (DE)**
• **KAISER, Bruno
D-77948 Oberschopfheim (DE)**

(74) Vertreter: **Mader, Wilfried
DaimlerChrysler AG,
Intellectual Property Management
IPM, C106
70546 Stuttgart (DE)**

(56) Entgegenhaltungen:
**EP-A- 0 499 706        DE-A- 19 512 904**

**Beschreibung**

Die Erfindung betrifft ein Verfahren zur Bestimmung des Eindeutigkeitsbereichs für die Messung der Zwischenfrequenzabweichung bei einem frequenzgeregeltem Radarsystem.

In Frequenz-Puls Radarsystemen, bei denen das Echosignal durch Frequenzumschaltung auf eine Zwischenfrequenz (ZF) umgesetzt wird (DE 41 04 907 C2), muß der Frequenzabstand zwischen Sende- und LO-Signal konstant sein, damit das ZF-Signal in das ZF Band fällt. Eine Änderung des Frequenzabstandes bei freilaufenden Oszillatoren aufgrund äußerer Bedingungen (z.B Temperatur oder Alterung) führt zu Einschränkungen in der Systemempfindlichkeit, die bis zu Signalausfällen führen können.

In vielen Radarsystemen mit freilaufenden Oszillatoren kann eine Frequenzregelung eingesetzt werden, mit der unter Verwendung der vorhandenen Auswertealgorithmen die Frequenzabweichung des ZF-Signals gemessen werden kann (DE 195 12 904 C2). Bei diesem Verfahren wird der Effekt ausgenutzt, daß die Abweichung des ZF-Signals von der Sollfrequenz auch im Videosignal festgestellt werden kann, und diese Abweichung groß ist gegenüber auftretenden Dopplerfrequenzen. Voraussetzung für die Anwendung des Verfahrens ist das Vorhandensein eines Echosignals, d.h. eines Zieles. Nach der Bestimmung der ZF-Abweichung kann die Sende- oder LO-Frequenz nachgeregelt werden, bis die Abweichung zu Null wird.

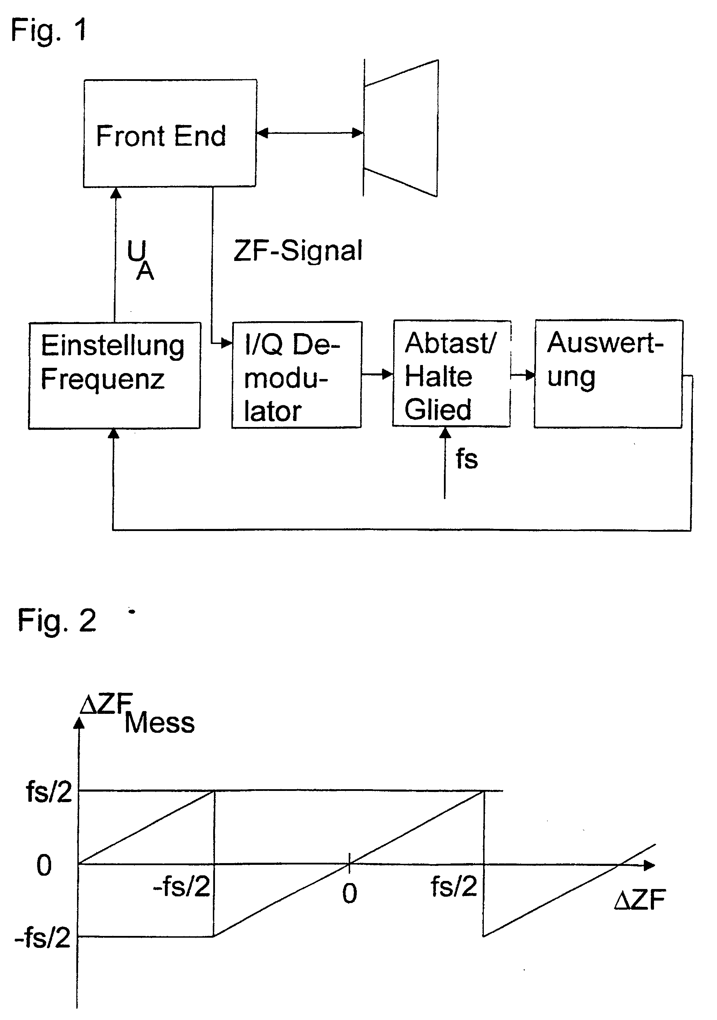

Ein Blockschaltbild des Verfahrens, wie es zum Beispiel im Radarsensor eines Abstandsregeltempomaten für ein Kraftfahrzeug eingesetzt wird. ist in Fig. 1 dargestellt. Das Echosignal (ZF-Ebene) wird im I/Q Demodulator auf die Video Ebene abgemischt und anschließend abgetastet. Für die Bestimmung der ZF-Abweichung (Sondermodus im Auswertealgorithmus des Radarsystems) ist die Abtastfrequenz $f_s$ höher eingestellt als bei der Signalverarbeitung zur Detektion von Zielen. Aus der Phasendifferenz der abgetasteten Signale läßt sich die Frequenzverschiebung des ZF-Signals bestimmen und ein entsprechender Wert für die Frequenzverstimmung (Abstimmspannung $U_A$) in das Frontend eingeben.

Der Frequenzbereich, der mit dem oben beschriebenen Verfahren eindeutig gemessen werden kann, ist abhängig von der Abtastfrequenz $f_s$. in Fig. 2 ist der Zusammenhang dargestellt zwischen der tatsächlichen ZF-Abweichung $\Delta ZF$ und der mit einer Abtastfrequenz $f_s$ ermittelten ZF-Abweichung $\Delta ZF_{Mess}$. Innerhalb des Intervalls von $\pm f_s/2$ kann die ZF-Abweichung eindeutig bestimmt werden (Eindeutigkeitsbereich), in den übrigen Bereichen treten aufgrund der Unterabtastung Mehrdeutigkeiten auf (Nichteindeutigkeitsbereiche).

Wird die Frequenzmessung zum Beispiel mit einer Abtastfrequenz von 60 MHz durchgeführt, kann ein Eindeutigkeitsbereich von $\pm$ 30 MHz erreicht werden.

Unter Berücksichtigung der Mechanismen, die zur Frequenzverstimmung führen, kann bei üblichen Radarsystemen davon ausgegangen werden, daß die Zeitkonstanten bei der Frequenzverstimmung sehr groß sind, so daß im üblichen Betrieb des Radarsystems bei genügend häufiger Messung der Frequenzablage und hinreichend schneller Regelung auf die Sollfrequenz der Eindeutigkeitsbereich der Frequenzmessung $\pm f_s/2$ nicht verlassen wird. Beim Einschalten des Systems kann jedoch nicht davon ausgegangen werden, daß die ZF-Abweichung im Eindeutigkeitsbereich der Messung liegt.

Aufgabe der Erfindung ist es deshalb, das Verfahren zur ZF-Abweichung gemäß der DE 195 12 904 C2 derart zu erweitern, daß der Eindeutigkeitsbereich identifiziert werden kann. Durch entsprechende Frequenzabstimmung kann dann sichergestellt werden, daß die Messung der ZF-Abweichung im Eindeutigkeitsbereich erfolgt.

Diese Aufgabe wird mit dem Verfahren nach Anspruch 1 gelöst. Vorteilhafte Ausführungen des erfindungsgemäßen Verfahrens sind Gegenstand weiterer Ansprüche.

Die Erfindung wird anhand von Zeichnungen näher erläutert. Es zeigen:

Fig. 1    Blockschaltbild zur Bestimmung der ZF-Abweichung gemäß der DE 195 12 904 C2, wie in der Beschreibungseinleitung beschrieben;

Fig. 2    Darstellung der mit einer Abtastfrequenz $f_s$ ermittelten ZF-Abweichung $\Delta ZF_{Mess}$ über der tatsächlichen ZF-Abweichung $\Delta ZF$ gemäß dem Verfahren nach der DE 195 12 904 C2, wie in der Beschreibungseinleitung beschrieben;

Fig. 3    Darstellung der mit einer Abtastfrequenz $f_s$ ermittelten ZF-Abweichung $\Delta ZF_{Mess}$ über der Abstimmspannung $U_A$ des Radarsystems nach dem erfindungsgemäßen Verfahren.

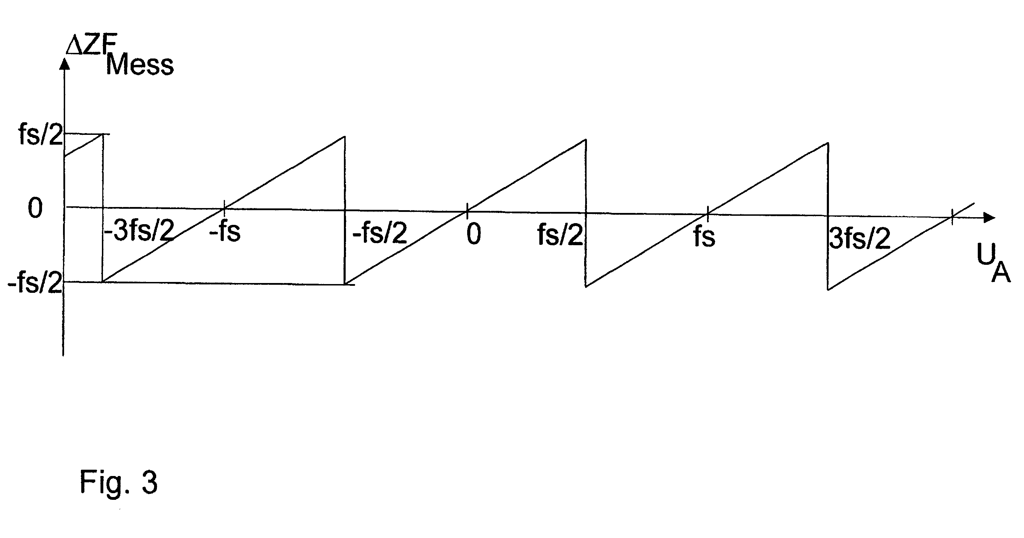

Die wesentliche Erkenntnis der Erfindung wird anhand von Fig. 3 erläutert. Durchfährt man bei Vorhandensein eines Echosignals den kompletten Frequenzbereich der Frequenzabstimmung und mißt dabei jeweils die ZF-Abweichung $\Delta ZF_{Mess}$, so erhält man eine Kurve, deren Verlauf ähnlich dem in Fig. 2 ist, wobei jedoch die ZF-Abweichung $\Delta ZF$ durch die Abstimmspannung $U_A$ ersetzt ist. In Fig. 3 ist diese Kurve mit einem erweiterten Bereich der ZF-Abweichung dargestellt. Aus der Kurve geht hervor, daß in den Bereichen $-3 f_s/2 \dots -f_s/2$ und $f_s/2 \dots 3 f_s/2$ der Abgleich auf den Phasenwert 0 (entspr. $\Delta ZF_{Mess} = 0$) zu einer ZF-Abweichung ($= -f_s$ bzw. $+ f_s$) führen würde, die um die Abtrastfrequenz $f_s$ über oder unter der tatsächlichen ZF-Abweichung ($= 0$) liegt. Die Abweichung um $\pm f_s$ von der ZF bewirkt jedoch aufgrund von Filtercharakteristika und aufgrund der Abtastung eine erhebliche Reduzierung der Signalamplitude sowie eine Reduzierung der Anzahl detektierter Ziele. Erfindungsgemäß wird dieser Effekt genutzt, um den Eindeutigkeitsbereich der Regelung zu bestimmen. Dazu wird eine Frequenzabstimmung des Radarsystems während des Empfangs von Echosignalen derart durchgeführt, daß sichergestellt ist, daß sowohl im Eindeutigkeitsbereich der ZF-Abweichung als auch in einem Nichteindeutigkeitsbereich der ZF-Abweichung jeweils mindestens ein Wert für die ZF-Abweichung $\Delta ZF_{Mess}$ in der Umgebung des Wertes Null eingestellt wird. Durch Vergleich der bei diesen Einstellungen ermittelten Signalamplituden der detektierten Ziele und/oder der Anzahl der detektierten Ziele kann der Eindeutigkeitsbereich als solcher erkannt und von den Nichteindeutigkeitsbereichen unterschieden werden.

Die Variation der Abstimmspannung $U_A$ muß in einem Zeitbereich erfolgen, in dem Signalschwankungen des Echosignals aufgrund von Zielfluktuationen kleiner sind als die durch die ZF-Verstimmung erwarteten Amplitudenschwankungen. Besonders vorteilhaft können die beiden folgenden Ausführungen eingesetzt werden:

1) Die Abstimmspannung (englisch: frequency adjust) des Oszillators wird über den gesamten Abstimmbereich in groben Schritten (- 5 MHz) durchfahren. In jedem Schritt wird die ZF-Abweichung bestimmt (nach DE 195 12 904 C2) und die Anzahl der Ziele sowie ein mittlerer Wert der Zielamplituden festgestellt. Nachdem der komplette Abstimmbereich durchfahren ist werden die Einstellungen mit ZF-Abweichung nahe oder identisch 0 hinsichtlich Anzahl Ziele und Signalamplituden verglichen. Die Einstellung mit dem besten Ergebnis wird als Starteinstellung ausgewählt. Dabei können die Kriterien Anzahl Ziele und Größe der Signalamplituden mit unterschiedlichem Gewicht in die Berechnung eingehen.

2) Die Frequenzabstimmung erfolgt mit einem vorgegebenen Startwert, der z.B. die mittlere Abstimmspannung sein kann oder ein Startwert, der bei Inbetriebnahme des Radarsensors ermittelt wurde. Nach Abgleich der ZF-Abweichung $\Delta ZF_{Mess}$ auf 0 wird eine fester Frequenzversatz von ca. +$f_s$ eingestellt. Anschließend wird die Anzahl der Ziele und/oder deren Amplituden bei diesen beiden Einstellungen verglichen. Ein Anstieg der Zielanzahl sowie der Amplituden bedeutet, daß die neue Einstellung im Eindeutigkeitsbereich liegt (eine Verstimmung um > 2 $f_s$ kann im Regelfall ausgeschlossen werden). Bei Reduzierung von Zielanzahl und Amplituden, kann die gleiche Verstimmung mit anschließendem Vergleich noch in die andere Richtung, d.h. mit negativem Frequenzversatz -$f_s$ , erfolgen. Nach Durchführung dieser Untersuchungen ist der Eindeutigkeitsbereich festgelegt.

Die beschriebenen Maßnahmen müssen nach dem Einschalten des Systems nur einmal durchgeführt werden, da die Verstimmung der ZF während des Betriebs über den Eindeutigkeitsbereich hinaus nach bisherigen Erkenntnissen ausgeschlossen werden kann.

Die Ausführung 1) kommt im Gegensatz zu Ausführung 2) ohne eine feste Voreinstellung aus. Die Nichtlinarität zwischen Frequenzverlauf und Abstimmspannung wird durch die relativ schwachen Amplitudenreduzierungen nahe um den Nullpunkt der ZF-Abweichung kompensiert.

Bei der Ausführung 2) wird erst nach der Festlegung einer Abstimmspannung mit ZF-Abweichung 0 die Untersuchung hinsichtlich des Eindeutigkeitsbereiches gestartet. Zur Durchführung wird - verglichen mit Ausführung 1) - wesentlich weniger Zeit benötigt (max. 2 zusätzliche Frequenzeinstellungen). Auch kommt die Zielfluktuation nicht so sehr zum Tragen, da alle Ziele aus dem Meßbereich berücksichtigt werden.

Beispiel (Abstandsradarsensor in einem Kraftfahrzeug):

- Abstimmbereich $\Delta ZF$      100 MHz
- Dauer für eine Frequenzmessung      350 ms

Bei drei aufeinanderfolgenden Frequenzmesszyklen bei unterschiedlichen Frequenzen, wie in Ausführung 2) vorgeschlagen, wird eine Gesamtmeßdauer von

$$T_{Meß} \approx 1 \text{ sek}$$

benötigt. In dieser Zeit ändert sich das Zielszenario nur unwesentlich, so daß die Bestimmung des Eindeutigkeitsbereiches mit ausreichender Genauigkeit erfolgen kann.

Es sollte sichergestellt sein, daß zumindest im Eindeutigkeitsbereich innerhalb der benötigten 350 ms eine Frequenzmessung abgeschlossen werden kann, d.h. der Signal-/Rauschabstand ausreichend ist. Während der gesamten Meßdauer ($T_{Meß}$) sollte keine starke Änderung der ZF auftreten (Änderungen über der Temperatur in der Aufwärmphase).

**Patentansprüche**

1. Verfahren zur Bestimmung des Eindeutigkeitsbereichs für die Messung der ZF-Abweichung bei einem frequenzgeregeltem Radarsystem, **dadurch gekennzeichnet, daß** eine Frequenzabstimmung des Radarsystems während des Empfangs von Echosignalen derart durchgeführt wird, daß im Eindeutigkeitsbereich der ZF-Abweichung sowie in einem Nichteindeutigkeitsbereich der ZF-Abweichung jeweils mindestens ein Wert für die ZF-Abweichung in der Umgebung des Wertes Null eingestellt wird, und durch Vergleich der Signalamplitude und/ oder der Anzahl der detektierten Ziele bei diesen Einstellungen der Eindeutigkeitsbereich als solcher erkannt wird.

2.  Verfahren nach Anspruch 1, **dadurch gekennzeichnet, daß** die Frequenzabstimmung derart durchgeführt wird, daß ein bestimmter Frequenzbereich, der Eindeutigkeitsbereich und Nichteindeutigkeitsbereich zumindest teilweise abdeckt, in Schritten durchlaufen wird.

3.  Verfahren nach Anspruch 1, **dadurch gekennzeichnet, daß** die Frequenzabstimmung folgendermaßen durchgeführt wird:

    -   Vorgabe eines festen Startwerts,
    -   Abgleich der gemessenen ZF-Abweichung auf den Wert Null,
    -   Einstellung eines Frequenzversatzes, dessen Betrag im wesentlichen der Abtastfrequenz entspricht, mit der das in die Videoebene abgemischte Echosignal abgetastet wird.

4.  Verfahren nach Anspruch 3, **dadurch gekennzeichnet, daß** ein positiver und/oder ein negativer Frequenzversatz eingestellt wird.

## Claims

1.  A method of determining the unambiguous range for the measurement of the IF deviation in a frequency controlled radar system, **characterised in that** a frequency tuning process of the radar system is carried out during reception of echo signals in such a manner that at least one value for the IF deviation in the vicinity of the value zero will be set in the unambiguous range for the IF deviation as well as in an ambiguous range for the IF deviation, and the unambiguous range is recognised as such by comparing the signal amplitudes and/or the number of detected targets at these settings.

2.  A method in accordance with Claim 1, **characterised in that** the frequency tuning process is carried out in such a manner that a specific frequency range, which at least partially covers the unambiguous range and the ambiguous range, is the frequency tuning process is carried out in the following traversed in step-like manner.

3.  A method in accordance with Claim 1, **characterised in that** the frequency tuning process is carried out in the following manner

    -   the provision of a fixed starting value,
    -   adjustment of the measured IF deviation to the value zero,
    -   setting of a frequency off-set whose value corresponds substantially to the sampling frequency with which the echo signal mixed in the video plane is sampled.

4.  A method in accordance with Claim 3, **characterised in that** a positive and/ora negative frequency off-set is set.

## Revendications

1.  Procédé de détermination de la plage de précision pour la mesure de l'écart FI dans un système radar régulé en fréquence, **caractérisé en ce qu'**un accord de fréquence du système radar est effectué durant la réception de signaux d'écho de telle sorte que dans la plage de précision de l'écart FI ainsi que dans une plage de non précision de l'écart FI respectivement au moins une valeur pour l'écart FI est réglée au voisinage de la valeur zéro, et par comparaison de l'amplitude du signal et/ou du nombre des cibles détectées lors de ces réglages, la plage de précision est reconnue comme telle.

2.  Procédé selon la revendication 1, **caractérisé en ce que** l'accord de fréquence est effectué de telle sorte qu'une plage de fréquence déterminée, qui recouvre au moins partiellement la plage de précision et la plage de non précision, est parcourue pas à pas.

3.  Procédé selon la revendication 1, **caractérisé en ce que** l'accord de fréquence est effectué de la manière suivante:

    -   prescription d'une valeur initiale fixe,
    -   réglage de l'écart FI mesuré sur la valeur zéro,
    -   réglage d'un décalage de fréquence, dont la valeur correspond sensiblement à la fréquence de balayage, à laquelle le signal d'écho mélangé dans le plan vidéo est balayé.

4.  Procédé selon la revendication 3, **caractérisé en ce qu'**un déplacement de fréquence positif et/ou négatif est réglé.

Fig. 1

Fig. 2

Fig. 3

EP 1 175 626 B1